# EUROPÄISCHE PATENTANMELDUNG

(11) **EP 2 319 304 A1**
(43) Veröffentlichungstag der Anmeldung: **11.05.2011**
(21) Anmeldenummer: 10401181.2
(22) Anmeldetag: 02.11.2010
(51) Int. Cl.: A01M 7/00

(54) **Spritzeinrichtung**

(30) Priorität: 06.11.2009 DE 102009044445
(71) Anmelder: Amazonen-Werke H. Dreyer GmbH & Co. KG, 49205 Hasbergen (DE)
(72) Erfinder: Dreyer, Justus, 49076 Osnabrück (DE)

(57) **Zusammenfassung**

Spritzeinrichtung zum Ausbringen von Flüssigkeiten, insbesondere für landwirtschaftliche Zwecke, mit einer an einem Ackerschlepper (3) angekuppelten gezogenen Feldspritze (1) mit Fahrwerk, Spritzmitteltank (6) und einer zugeordneten Spritzbalkenanordnung (7) mit zumindest einer quer zur Fahrtrichtung verlaufenden Flüssigkeitsleitung, die in Abständen mit Spritzdüsen versehen ist, wobei den Spritzdüsen über die zumindest eine Flüssigkeitsleitung das auszubringende Spritzmittel aus dem Spritzmitteltank (6) fördernden und den Spritzdruck erzeugenden Förderpumpe in einstellbarer Menge zuführbar ist, wobei dem System ein mittels Leitungen (11) verbundener Frischwasserbehälter (10) zugeordnet ist. Um bei einer Vergrößerung der zulässigen Gesamtmasse des Gespanns einen vergrößerten Frischwasserbehälter (10) verwenden zu können, ist vorgesehen, dass der Frischwasserbehälter (10) beabstandet vom Spritzmitteltank (6) angeordnet ist.

## Beschreibung

Die Erfindung betrifft eine Spritzeinrichtung gemäß des Oberbegriffes des Patentanspruches 1.

Derartige Spritzeinrichtungen sind in der Praxis bekannt geworden und als sog. gezogene Feldspritzen bekannt, die von einem Ackerschlepper über das zu behandelnde Feld bezogen werden. Diese Feldspritzen weisen neben dem Spritzmitteltank einen Frischwasserbehälter auf, der über Leitungen mit dem Spritzsystem der Feldspritze verbunden ist. Aufgrund der Anordnung des Frischwasserbehälters auf dem Rahmen und dem Fahrwerk der Feldspritze ist das Fassungsvermögen und die Größe des Frischwassertanks begrenzt. Darüber hinaus ist aufgrund der zulässigen Gesamtmassen bei gezogenen Gespannen auch die Gesamtgröße der Feldspritze in Bezug auf den jeweils verwendeten Ackerschlepper in vielen Fällen zu klein.

Der Erfindung liegt die Aufgabe zugrunde, bei einer Vergrößerung der gesamt zulässigen Gesamtmasse des Gespannes einen vergrößerten Frischwasserbehälter verwenden zu können.

Diese Aufgabe wird erfindungsgemäß dadurch gelöst, dass der Frischwasserbehälter beabstandet vom Spritzmitteltank angeordnet ist. Infolge dieser Maßnahme wird die Grundvoraussetzung dafür geschaffen, den Frischwasserbehälter dort anordnen zu können, welches es ermöglicht, einerseits einen größeren Frischwasserbehälter zu verwenden und andererseits das gesamt zulässige Gesamtgewicht des Gespannes zu vergrößern, außerdem lässt sich durch diese Maßnahme eine modulare Bauweise bzw. Aufbau der Feldspritze auch mit einem größeren Frischwasserbehälter verwirklichen.

In bevorzugter Weise ist eine einfache Anordnung des Frischwasserbehälters zur Erreichung der erfindungsgemäßen

Vorteile vorgesehen, dass der Spritzmitteltank auf dem Fahrwerk der gezogenen Feldspritze und der

Frischwasserbehälter im Frontbereich des Ackerschleppers angeordnet ist.

Besonders vorteilhaft hat sich gezeigt, dass der Frischwasserbehälter als Fronttank ausgebildet ist. Hierdurch ist es möglich, den Frischwasserbehälter jeweils bei Bedarf in einfacher Weise abbauen oder anbauen zu können.

Weitere Einzelheiten der Erfindung sind der

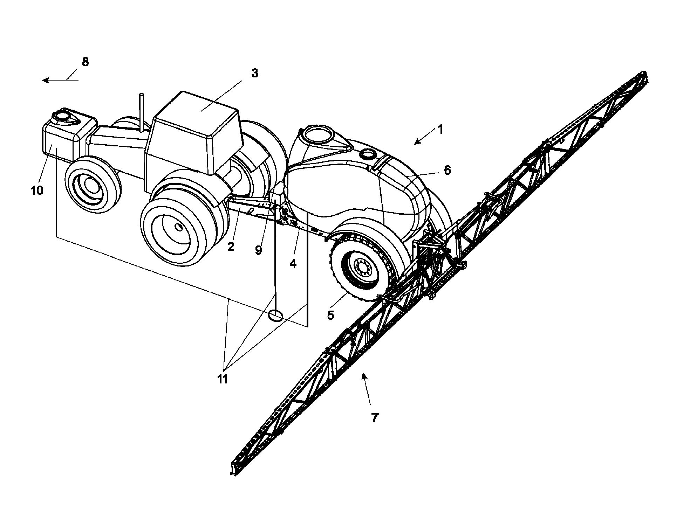

Beispielsbeschreibung und der Zeichnungen zu entnehmen. Die Zeichnung zeigt

eine von einem Ackerschlepper gezogene Feldspritze mit dem sich im Frontanbau befindlichen Frischwasserbehälter in perspektivischer Darstellung.

Die landwirtschaftliche Feldspritze ist mittels einer Zugdeichsel an die Zugvorrichtung des Ackerschleppers angekuppelt. Die Feldsprite weist einen Rahmen auf, der sich über der die Laufräder aufweisenden Fahrwerk auf dem Boden abstützt. Auf dem Rahmen ist der Spritzmitteltank zur Aufnahme des auszubringenden Spritzmittels angeordnet. Auf der Rückseite des Rahmens ist die Spritzbalkenanordnung in bekannter Weise angeordnet. Der Spritzbalkenanordnung sind Flüssigkeitsleitungen, die in Abständen mit Spritzdüsen versehen ist angeordnet. Die Spritzbalkenanordnung erstreckt sich quer zur Fahrtrichtung. Das auszubringende Spritzmittel wird aus dem Spritztank mittels einer Pumpe gefördert und über Flüssigkeitsleitungen und Dosiereinrichtungen den an dem Spritzbalken angeordneten Spritzdüsen in einstellbarer Weise zugeleitet. Die Pumpe erzeugt den erforderlichen Spritzdruck. Auf der Vorderseite des Ackerschleppers ist im Abstand zu dem Spritzmitteltank der Frischwasserbehälter angeordnet. Der Frischwasserbehälter weist Ankupplungsmöglichkeiten zur Ankupplung an Trag- und Kuppeleinrichtungen, beispielsweise den Frontkraftheber des Ackerschleppers auf. Somit ist der Frischwasserbehälter im Frontbereich des Ackerschleppers angeordnet, während der Spritzmitteltank auf dem Fahrwerk der gezogenen Spritze angeordnet ist. Der Frischwasserbehälter ist als Fronttank ausgebildet und über die Leitung mit dem Flüssigkeitsleitungs- und Dosiersystem der Feldspritze verbunden.

## Patentansprüche

1. Spritzeinrichtung zum Ausbringen von Flüssigkeiten, insbesondere für landwirtschaftliche Zwecke, mit einer an einem Ackerschlepper angekuppelten gezogenen Feldspritze mit Fahrwerk, Spritzmitteltank und einer zugeordneten Spritzbalkenanordnung mit zumindest einer quer zur Fahrtrichtung verlaufenden Flüssigkeitsleitung, die in Abständen mit Spritzdüsen versehen ist, wobei den Spritzdüsen über die zumindest eine Flüssigkeitsleitung das auszubringende Spritzmittel aus dem Spritzmitteltank fördernden und den Spritzdruck erzeugenden Förderpumpe in einstellbarer Menge zuführbar ist, wobei dem System ein mittels Leitungen verbundener Frischwasserbehälter zugeordnet ist, **dadurch gekennzeichnet, dass** der Frischwasserbehälter beabstandet vom Spritzmitteltank angeordnet ist.

2. Spritzeinrichtung nach Anspruch 1, **dadurch gekennzeichnet, dass** der Spritzmitteltank auf dem Fahrwerk der gezogenen Feldspritze und der Frischwasserbehälter im Frontbereich des Ackerschleppers angeordnet ist.

3. Spritzeinrichtung nach Anspruch 2, **dadurch gekennzeichnet, dass** der Frischwasserbehälter als Fronttank ausgebildet ist.
